# EUROPÄISCHE PATENTANMELDUNG

(11) **EP 2 728 130 A1**
(43) Veröffentlichungstag der Anmeldung: **07.05.2014**
(21) Anmeldenummer: 12190629.1
(22) Anmeldetag: 30.10.2012
(51) Int. Cl.: F01D 25/28

(54) **Hilfsvorrichtung**

(71) Anmelder: Siemens Aktiengesellschaft, 80333 München (DE)
(72) Erfinder: Kartheuser, Frank, 04931 Mühlberg/Elbe (DE); Krabiell, Kay, 16562 Hohen Neuendorf (DE); Müller, Jean, 10589 Berlin (DE)

(57) **Zusammenfassung**

Die Erfindung betrifft eine Hilfsvorrichtung (1) zur Montage und/oder Demontage eines Führungsringsegments (2), welches an einem Träger (3), insbesondere einem Turbinenleitschaufelträger einer Gasturbine, anzubringen oder gehalten ist, mit einem Grundkörper (5), welcher an dem Führungsringsegment (2) lösbar befestigbar ist, und einer Halteeinrichtung (18), an welcher ein Zugmittel (28) lösbar befestigbar ist, wobei die Halteeinrichtung (18) ausgebildet ist, eine über das Zugmittel (28) in einer Einbaurichtung oder Austreibrichtung (X) des Führungsringsegments (2) einwirkende Zugkraft auf den Grundkörper (5) zu übertragen.

## Beschreibung

Die Erfindung betrifft eine Hilfsvorrichtung zur Montage und/oder Demontage eines Führungsringsegments, welches an einem Träger, insbesondere einem Turbinenleitschaufelträger einer Gasturbine, anzubringen oder gehalten ist. Des Weiteren betrifft die vorliegende Erfindung ein Verfahren zum Montieren und/oder Demontieren des Führungsringsegments.

Im Rahmen der Triebwerksinstandsetzung werden die Instand zu setzenden Triebwerke in ihre einzelnen Komponenten zerlegt. Aufgrund der im Betrieb des Triebwerkes herrschenden hohen Temperaturen verziehen sich die auszubauenden Komponenten häufig so sehr, dass sie nur mit einem hohen Kraftaufwand voneinander getrennt werden können. Vor allem Führungsringsegmente im Turbinenmodul des Triebwerkes werden im Betrieb des Triebwerkes starken Temperaturschwankungen ausgesetzt.

Um die in Umfangsrichtung des Turbinenleitschaufelträgers hintereinander angeordneten Führungsringsegmente aus dem Träger auszutreiben, werden die Turbinenleitschaufelträger zunächst in ihre zwei halbschalenartigen Elemente zerlegt. Anschließend werden die in Nuten eingesetzten Führungsringsegmente mit Hammer, Keil und Kunststoffklötzen aus dem Turbinenleitschaufelträger ausgetrieben. Dazu muss zunächst zwischen zwei benachbarte Führungsringsegmente ein Keil eingeschlagen werden. Anschließend wird mithilfe des Hammers seitlich auf den Keil gehämmert, um einen der Führungsringsegmente von dem benachbarten Führungsringsegment zu beabstanden. Sobald genügend Platz zwischen den zwei Führungsringsegmenten besteht, wird ein Kunststoffklotz eingesetzt und das Führungsringsegment durch Hammerschläge auf den Kunststoffklotz aus der Nut des Trägers ausgetrieben.

Zur Montage der Führungsringsegmente werden ebenso Hammer und Kunststoffklötze verwendet, um die Führungsringsegmente in die Nuten der Turbinenleitschaufelträger einzutreiben. Nachteilig an dieser Vorgehensweise ist, dass die händische Montage und Demontage ein erhöhtes Verletzungsrisiko für den Arbeiter mit sich bringt. Zudem können die Führungsringsegmente trotz Einsatz der Kunststoffklötze durch das Hämmern beschädigt werden. Außerdem ist der Montage- und Demontagevorgang aufwendig und zeitintensiv.

Ausgehend von diesem Stand der Technik ist es eine Aufgabe der vorliegenden Erfindung, eine Hilfsvorrichtung der eingangs genannten Art bereitzustellen, bei der das ein- bzw. auszubauende Führungsringsegment während des Arbeitsvorgangs nicht beschädigt, das Verletzungsrisiko für den Arbeiter verringert und der Montage- und Demontagevorgang vereinfacht wird.

Zur Lösung dieser Aufgabe schafft die vorliegende Erfindung eine Hilfsvorrichtung mit einem Grundkörper, welcher an dem Führungsringsegment lösbar befestigbar ist, und einer Halteeinrichtung, an welcher ein Zugmittel lösbar befestigbar ist, wobei die Halteeinrichtung ausgebildet ist, eine über das Zugmittel zumindest im Wesentlichen in einer Einbaurichtung oder Austreibrichtung des Führungsringsegments einwirkende Zugkraft auf den Grundkörper zu übertragen.

Damit liegt der Erfindung die Überlegung zugrunde, Führungsringsegmente nicht mehr ausschließlich aus dem Träger zu schlagen, sondern unter zu Hilfenahme eines Zugmittels aus dem bzw. in den Träger zu ziehen.

Führungsringsegmente weisen keine eigenen Angriffspunkte auf, um Zugmittel direkt ansetzen zu können. Insofern sieht die Erfindung eine Hilfsvorrichtung vor, die an dem Führungsringsegment befestigt werden kann und ihrerseits eine Halteeinrichtung aufweist, an welcher das Zugmittel angebracht werden kann. Auf diese Weise kann das Zugmittel über die Hilfsvorrichtung indirekt an dem Führungsringsegment angreifen. Die Zugkraft sollte dabei in Einbau- bzw. Ausbaurichtung des Führungsringsegments auf die Hilfsvorrichtung wirken, um ein Verkanten des Führungsringsegments bei seiner Montage bzw. Demontage zu vermeiden. Vorteilhaft ist, dass die Hilfsvorrichtung sowohl für die Montage, als auch für die Demontage des Führungsringsegments verwendet werden kann.

In bevorzugter Weise ist eine Verriegelungseinheit an dem Grundkörper vorgesehen, insbesondere lösbar befestigt, welche ausgebildet ist, den Grundkörper lösbar an dem Führungsringsegment zu befestigen. Vorteilhafterweise ist die Verriegelungseinheit in Einbaurichtung oder Austreibrichtung gesehen an einer vorderen Stirnseite des Grundkörpers angeordnet und ausgebildet, das Führungsringsegment zumindest in einem verriegelten Zustand zu untergreifen und/oder hintergreifen. Bei der Demontage der Führungsringsegmente werden die hintereinander angeordneten Führungsringsegmente aus dem Träger oder dem halbschalenartigen Turbinenleitschaufelträger der Reihe nach von einer Seite beginnend ausgebaut. Durch diese Vorgehensweise ist das Führungsringsegment an seiner vorderen Stirnseite frei zugänglich und stößt an seiner hinteren Stirnseite an das nachfolgende Führungsringsegment. Somit ist eine an der vorderen Stirnseite des Grundkörpers vorgesehene Verriegelungseinheit besonders einfach montierbar. Zudem kann die Hilfsvorrichtung durch die lösbare Anordnung der Verriegelungseinheit an dem Grundkörper auf einfache Weise seitengerüstet werden. Das heißt, dass zwei Verriegelungseinheiten vorgesehen sein können, wobei eine für eine linke und eine weitere für eine rechte Anordnung an dem Grundkörper geeignet ist, um entsprechend der gewünschten Einbau- bzw. Austreibrichtung des Führungsringsegments die Hilfsvorrichtung seitenzurüsten.

Zweckmäßigerweise weist die Verriegelungseinheit zwei Backen auf, welche zwischen einer inneren und einer äußeren Stellung hin und her bewegbar sind, wobei die Backen in einer äußeren Stellung mit dem Führungsringsegment in Eingriff kommen. In bevorzugter Weise weisen die Backen an ihren voneinander wegweisenden Außenseiten Aussparungen auf, um in einer äußeren Stellung mit an dem Führungsringsegment ausgebildeten Verhakungen in Eingriff zu kommen. Diese Anordnung macht sich die an der Unterseite des Führungsringsegments vorhandenen Verhakungen zunutze, über welche die Führungsringsegmente in Nuten des Trägers geführt und gehalten sind. Die Verriegelungseinheit gewährt auf diese Weise eine formschlüssige, zugfeste und lösbare Verbindung. Außerdem ist vorteilhaft, dass die auseinandergespreizten Backen in ihrer äußeren Stellung flächig an nach unten abstehende Verhakungsflanken des Führungsringsegments gedrückt werden können. Dadurch wird die Stabilität der Verbindung zwischen der Hilfsvorrichtung und dem Führungsringsegment weiter verbessert und ein Wegdrehen des Grundkörpers von dem Führungsringsegment wird vermieden.

Um die Verriegelungseinheit von außen betätigen zu können, weist die Verriegelungseinheit einen Hebelmechanismus auf, welcher ausgebildet ist, die Backen zwischen der inneren und der äußeren Stellung hin und her zu bewegen, und insbesondere ein Arretierungsmittel vorgesehen ist, um den Hebelmechanismus zumindest in einem verriegelten Zustand der Verriegelungseinheit zu arretieren. Beispielsweise kann ein von außen bedienbarer Hebel vorgesehen sein, welcher beim Betätigen ein keilartiges Element zwischen die beiden Backen drückt, um diese aus ihrer inneren in eine äußere Stellung zu bewegen.

Vorteilhafterweise ist die Halteeinrichtung an der Verriegelungseinheit vorgesehen, insbesondere lösbar befestigt. Ferner kann die Halteeinrichtung eine Anschlagöse aufweisen. Somit kann das Zugmittel auf einfache Weise an der Hilfsvorrichtung angebracht werden.

Weiterhin kann an einer Unterseite des Grundkörpers eine Anlagefläche ausgebildet sein, welche mit dem Führungsringsegment zumindest bereichsweise flächig in Kontakt gebracht werden kann. Dadurch ist die Hilfsvorrichtung gut handhabbar, da zur Stabilisierung der Hilfsvorrichtung der Grundkörper per Hand oder mittels weiterer Hilfsmittel gegen das Führungsringsegment gedrückt werden kann. Zur Vergrößerung der mit dem Führungsringsegment in Kontakt stehenden Anlagefläche kann diese eine zu dem Führungsringsegment korrespondierende Außenwölbung aufweisen.

Um die Hilfsvorrichtung besonders gut an den länglichen Führungsringsegmenten anbringen zu können, kann der Grundkörper eine längliche Grundform aufweisen.

In Weiterbildung der vorliegenden Erfindung kann der Grundkörper wenigstens ein grundkörperfestes Anschlagselement aufweisen, insbesondere welches an einer der Halteeinrichtung gegenüberliegenden Stirnseite des Grundkörpers ausgebildet ist. Somit kann beispielsweise ein Hammer als Schlagkörper eingesetzt werden, um das mit der Hilfsvorrichtung verbundene Führungsringsegment auszutreiben bzw. einzusetzen, ohne dass ein direkter Kontakt zwischen dem Hammer und dem Führungsringsegment stattfindet. Auf diese Weise wird das Führungsringsegment nicht beschädigt.

Gemäß einem weiteren Aspekt der vorliegenden Erfindung weist der Grundkörper eine L-förmige Grundform auf, wobei ein Schenkel des L-förmigen Grundkörpers ein grundkörperfestes Anschlagelement bildet. Beispielsweise kann der Schenkel an einem der Halteeinrichtung gegenüberliegenden Ende des Grundkörpers ausgebildet sein, um eine große Anschlagfläche für einen Hammer bereitzustellen.

In weiterer Ausgestaltung ist ein Schlagkörper vorgesehen, welcher an dem Grundkörper zumindest im Wesentlichen entlang der Einbau- oder Austreibrichtung des Führungsringsegments hin und her bewegbar geführt ist, wobei eine Endposition des Schlagkörpers durch das Anschlagelement definiert ist. Auf diese Weise kann ein geführter Schlagkörper derart mit dem Führungsringsegment in Verbindung gebracht, dass ein Impuls des Schlagkörpers auf das Führungsringsegment übertragen wird, um das Führungsringsegment aus einem Träger auszutreiben oder in diesen einzusetzen. Dabei ist der Schlagkörper zumindest im Wesentlichen entlang der Einbau- bzw. Austreibrichtung des Führungsringsegmentes hin und her bewegbar, um eine Verhakung des Führungsringsegments zu vermeiden. Konkret wird der in Austreibrichtung wirkende Impuls des Schlagkörpers zunächst auf den Grundkörper übertragen, indem der Schlagkörper manuell aus seiner zurückgeführten Position kraftvoll in seine Endposition nach vorne bewegt und gegen das grundkörperfeste Anschlagelement geschlagen wird. Der auf den Grundkörper übertragene Impuls wird an das an dem Grundkörper befestigte Führungsringsegment weitergegeben. Anschließend wird der Schlagkörper manuell wieder zurückgeführt und erneut gegen das Anschlagelement geschlagen. Auf diese Art und Weise wird das an dem Träger gehaltene Führungsringsegment aus dem Träger ausgetrieben bzw. eingesetzt. Durch Erhöhung des Schlaggewichts und/oder Vergrößerung des Ausholweges und/oder Erhöhung der Beschleunigung des Schlagkörpers kann der Impuls des Schlaggewichts auf das Führungsringsegment entsprechend vergrößert werden. Entsprechend, wenn eine Verringerung des Impulses gewünscht ist, kann das Schlaggewicht und/oder der Ausholweg und/oder die Beschleunigung des Schlagkörpers verringert werden.

Weiterhin kann der Grundkörper eine U-förmige Grundform aufweisen. Dabei kann zwischen den beiden U-Schenkeln ein die beiden Schenkel verbindender Führungssteg vorgesehen sein, an welchem der Schlagkörper geführt ist. Vorteilhaft ist, dass der Schlagkörper zwischen den beiden Schenkeln gut von außen zugänglich ist, um den Schlagkörper hin und her bewegen und vor allem kräftig gegen das Anschlagelement schlagen zu können. Zudem ist diese Ausführungsform sehr stabil, da der Führungssteg beidseitig gehalten ist, so dass auch verhältnismäßig schwere Schlagkörper verwendet werden können.

Zweckmäßigerweise bildet der in Einbau- bzw. Austreibrichtung vorne angeordnete Schenkel das Anschlagelement und/oder der hinten angeordnete Schenkel definiert eine Ausholposition. Somit kann die Hilfsvorrichtung sowohl zum Demontieren als auch zum Montieren des Führungsringsegments in Austreib- bzw. Einbaurichtung verwendet werden, da jeder der beiden Schenkel als Anschlagelement dienen kann.

In bevorzugter Weise ist eine Führungseinheit an dem Grundkörper vorgesehen, insbesondere lösbar befestigt, welche ausgebildet ist, um den Grundkörper während der Montage oder Demontage des Führungsringsegments in seiner Lage relativ zu dem Führungsringsegment zu führen. Durch die Führungseinheit wird die Hilfsvorrichtung in ihrer Lage relativ zu dem Führungsringsegment gehalten. Vorteilhaft ist, dass dadurch auch verhältnismäßig schwere Hilfsvorrichtungen einfach handzuhaben sind. Ohne die Führungseinheit müsste die Hilfsvorrichtung je nach Lage des Trägers mit einem hohen Kraftaufwand manuell an dem Führungsringsegment gehalten werden. Somit kann die Hilfsvorrichtung auf einfache Weise auch an einem auf der Seite liegenden Träger verwendet werden. Durch die lösbare Anordnung der Führungseinheit an der Hilfsvorrichtung ist die Hilfsvorrichtung wartungsfreundlich. Zudem können von der Austreib- bzw. Einbaurichtung des Führungsringsegment abweichende, auf den Grundkörper wirkende Kräfte von der Führungseinheit aufgenommen und von dem Führungsringsegment ferngehalten werden.

Um eine besonders sichere und einfach handhabbare Führung der Hilfsvorrichtung bereitzustellen, kann die Führungseinheit wenigstens eine an dem Grundkörper gehaltene Führungsschiene aufweisen, welche ausgebildet ist, um in eine parallel zu dem zu montierenden oder demontierenden Führungsringsegment verlaufende Nut des Trägers einzugreifen und in dieser bewegbar geführt zu werden.

Damit die Führungseinheit besonders leichtgängig in der parallel zu dem auszubauenden Führungsringsegment verlaufenden Nut bewegbar ist, kann die Führungsschiene an ihrem mit zu der Nut weisenden Endbereich Rollen tragen, insbesondere wobei die Führungsschiene zumindest an ihrem mit der Nut in Eingriff zu bringenden Endbereich Rollen tragen. Durch die in der Nut laufenden Rollen kann die Führungsschiene passgenau in der Nut gleiten. Beispielsweise sind weitere Rollen außerhalb der Nut an der Führungsschiene gehalten, welche auf der Trägeroberseite benachbart zu der Nut laufen, um eine zusätzliche Abstützung der Führungsschiene gegenüber dem Träger zu ermöglichen.

Weiterhin betrifft der Gegenstand der vorliegenden Erfindung ein Verfahren zum Montieren und/oder Demontieren eines Führungsringsegments, welches an einem Träger, insbesondere einem Turbinenleitschaufelträger einer Gasturbine, anzubringen oder gehalten ist, bei welchem die zuvor beschriebene Hilfsvorrichtung mit einer an ihrer Unterseite vorgesehenen Anlagefläche mit einer von dem Träger wegweisenden Außenseite des Führungsringsegments in Kontakt gebracht wird, die Hilfsvorrichtung an dem Führungsringsegment lösbar befestigt wird, eine Halteeinrichtung, insbesondere eine Anschlagöse, in Einbaurichtung bzw. Austreibrichtung gesehen vorne an dem Grundkörper lösbar befestigt wird, ein Zugmittel, insbesondere ein Seilzug, mit der Halteeinrichtung, insbesondere der Anschlagöse verbunden wird, und das Zugmittel gespannt wird, um die Hilfsvorrichtung in Einbaurichtung bzw. Austreibrichtung zu ziehen.

Um das Zugmittel auf einfache Weise von außen an die Hilfsvorrichtung heranführen zu können, kann in Austreib- bzw. Einbaurichtung vor der Hilfsvorrichtung ein Umlenkmittel, insbesondere eine weitere Anschlagöse, an dem Träger befestigt werden, um eine von dem Zugmittel aufgebrachte Zugkraft in Einbau- bzw. Austreibrichtung umzulenken.

Weiterhin kann mit wenigstens einem Schlagkörper gegen ein grundkörperfestes Anschlagelement geschlagen werden, um mit jedem Schlag einen Impuls des Schlagkörpers über den Grundkörper auf das Führungsringsegment in Einbau- bzw. Austreibrichtung zu übertragen. Dadurch kann kurzzeitig ein Impuls auf das Führungsringsegment übertragen werden, wenn das Führungsringsegment bei der Montage bzw. Demontage beispielsweise klemmt.

Auf einfachste Weise kann ein Hammer als Schlagkörper eingesetzt werden, wobei der Schlagkörper insbesondere gegen das grundkörperfeste Anschlagselement geschlagen wird.

Gemäß einem weiteren Aspekt der vorliegenden Erfindung kann ein an dem Grundkörper entlang der Einbaurichtung bzw. Austreibrichtung geführtes Schlaggewicht eingesetzt werden, welches vor und zurück bewegt wird, wobei der Schlagkörper bei der Vorwärtsbewegung gegen das grundkörperfeste Anschlagelement geschlagen wird. Durch die Führung des Schlagkörpers wird das Verletzungsrisiko des die Hilfsvorrichtung bedienenden Arbeiters verringert.

Vorteilhafterweise wird ein an dem Grundkörper befestigtes Führungsmittel zumindest teilweise in eine parallel zu dem auszutreibenden bzw. einzubauenden Führungsringsegment verlaufende Nut des Trägers eingesetzt, um die Hilfsvorrichtung in ihrer Lage relativ zu dem Führungsringsegment zu stützen und entlang der Einbau- bzw. Austreibrichtung zu führen. Dadurch sind auch verhältnismäßig schwere Hilfsvorrichtungen leicht zu bedienen.

Hinsichtlich weiterer vorteilhafter Ausgestaltungen der Erfindung wird auf die Unteransprüche sowie auf die nachfolgende Beschreibung von einem Ausführungsbeispiel unter Bezugnahme auf die beiliegende Zeichnung verwiesen. In der Zeichnung zeigt:
- Figur 1: eine Hilfsvorrichtung gemäß einer Ausführungsform der vorliegenden Erfindung in Draufsicht;
- Figur 2: die Hilfsvorrichtung aus Figur 1 im befestigten Zustand in Draufsicht;
- Figur 3: die an einem Führungsringsegment befestigte Hilfsvorrichtung aus Figur 1 in Draufsicht; und
- Figur 4: die Hilfsvorrichtung aus Figur 1 im befestigten Zustand mit einem daran befestigten Zugmittel in vereinfachter perspektivischer Darstellung.

In der Zeichnung ist eine Hilfsvorrichtung 1 gemäß einer Ausführungsform der vorliegenden Erfindung dargestellt. Die Hilfsvorrichtung 1 dient sowohl zum Montieren als auch zum Demontieren eines Führungsringsegments 2, welches an einem Träger 3, hier einem Turbinenleitschaufelträger einer Gasturbine, gehalten ist. Im Nachfolgenden ist die Hilfsvorrichtung 1 anhand der Demontage des Führungsringsegments 2 erläutert, wobei mithilfe der Hilfsvorrichtung 1 das Führungsringsegment 2 nicht nur in Austreibrichtung X aus dem Träger 3 ausgetrieben, sondern zur Montage auch entgegengesetzt zu der Austreibrichtung X in Einbaurichtung in den Träger 3 gezogen werden kann.

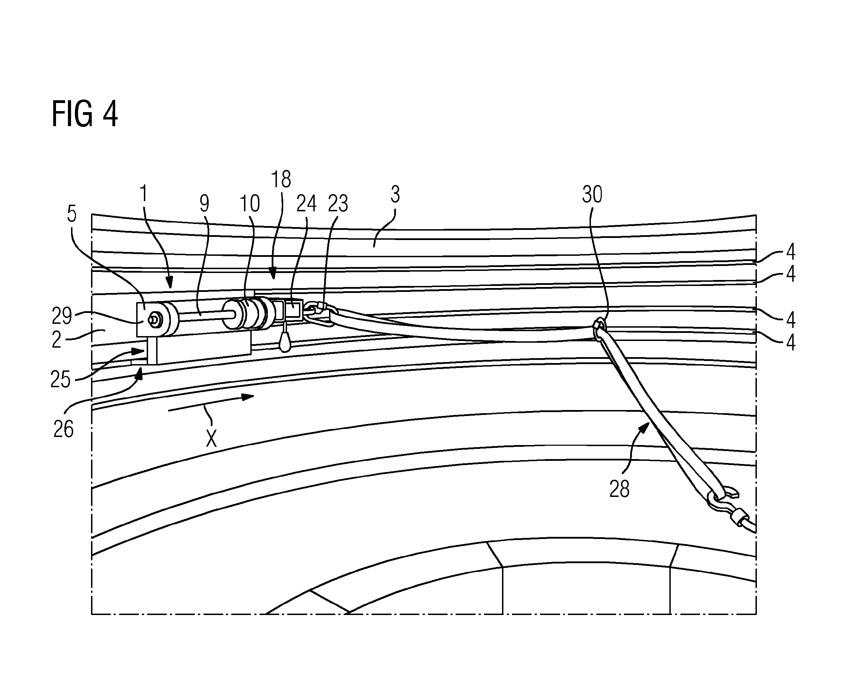

In Figur 4 ist gut erkennbar, dass der Turbinenleitschaufelträger 3 halbschalenartig ausgebildet ist und in Umfangsrichtung mehrere parallel zueinander verlaufende Nuten 4 aufweist. In den Nuten 4 sind nebeneinander mehrere nicht dargestellte Leitschaufelreihen angeordnet, wobei jeweils in einer Nut 4 zwischen zwei Leitschaufelreihen mehrere hintereinander angeordnete Führungsringsegmente 2 eingeschoben sind.

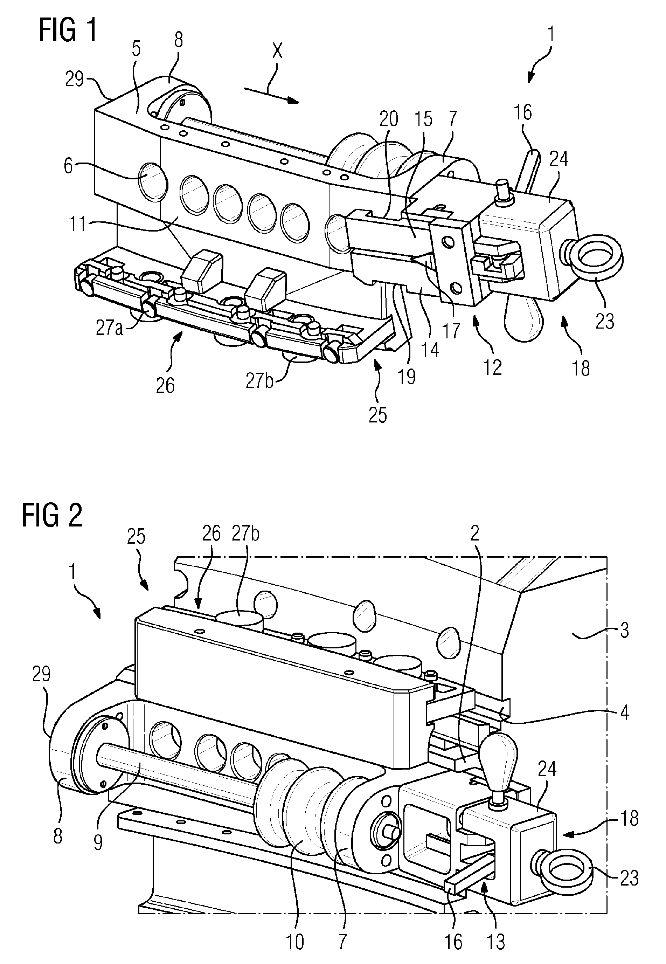

Die Hilfsvorrichtung 1 weist einen länglichen Grundkörper 5 aus einem Vollmaterial auf, welcher zur Gewichtsreduzierung eine Vielzahl von Bohrungen 6 besitzt, siehe insbesondere Figur 1. Der Grundkörper 5 ist U-förmig ausgebildet und hält zwischen seinen beiden grundkörperfesten Schenkeln 7, 8 einen Führungssteg 9. An dem Führungssteg 9 ist ein Schlagkörper 10 entlang einer mit dem Pfeil X gekennzeichneten Austreibrichtung des Führungsringsegments 2 hin und her bewegbar geführt. Der in Figur 2 rechts dargestellte Schenkel 7 ist als ein Anschlagelement ausgebildet und definiert eine Endposition des Schlagkörpers 10. Der gegenüberliegende links dargestellte Schenkel 8 begrenzt eine maximale Ausholposition für den Schlagkörper 10. Des Weiteren ist an der in Figur 2 links liegenden Stirnseite des Grundkörpers 5 außenseitig ein weiteres Anschlagelement 29 ausgebildet. An einer Unterseite des Grundkörpers 5 ist eine Anlagefläche 11 ausgebildet, welche mit dem Führungsringsegment 2 bereichsweise flächig in Kontakt gebracht werden kann.

In analoger Weise kann die Hilfsvorrichtung 1 auch für den Ausbau des Führungsringsegments 2 in einer zu der mit dem Pfeil X gezeigten Austreibrichtung entgegengesetzten Richtung zum Ausbauen des Führungsringsegments 2 verwendet werden. Dann bildet entsprechend der links dargestellte Schenkel 8 das Anschlagelement und der rechte Schenkel 7 begrenzt die maximale Ausholposition des Schlagkörpers 10.

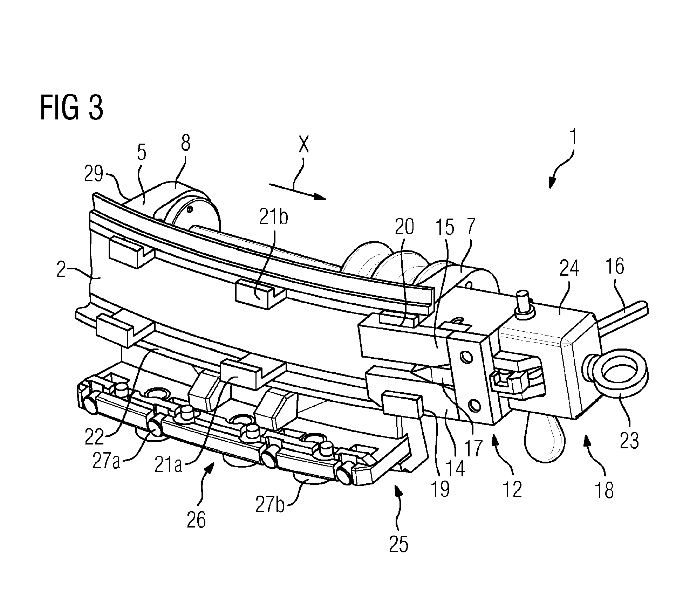

An dem Grundkörper 5 ist eine Verriegelungseinheit 12 lösbar befestigt, welche in Austreibrichtung X gesehen an einer vorderen Stirnseite des Grundkörpers 5 angeordnet ist. Konkret weist die Verriegelungseinheit 12 einen Hebelmechanismus 13 auf, welcher mit zwei das Führungsringsegment 2 untergreifenden Backen 14, 15 zusammenwirkt. Der an seinem unteren Ende gelagerte Hebel 16 ist mit einem keilartigen Dorn 17 wirkverbunden. In dem in Figur 1 dargestellten gelösten Zustand des Hebels 16, ist der Dorn 17 zurückgezogen und die Backen 14, 15 befinden sich in ihrer inneren Stellung, d.h. die Verriegelungseinheit 12 ist entriegelt. Im gezogenen Zustand des Hebels 16 wird der Dorn 17, wie in Figur 3 gut erkennbar ist, zwischen die beiden Backen 14, 15 gedrückt und spreizt diese in ihre äußere Stellung, wodurch der Grundkörper 5 an dem Führungsringsegment 2 befestigt ist. Weiterhin ist ein nicht dargestellter Arretierstift vorgesehen, welcher den Hebel 16 in seinem gezogenen Zustand arretiert.

In Figur 3 ist gut erkennbar, dass die Backen 14, 15 an ihren Außenseiten Aussparungen 19, 20 aufweisen, welche mit an dem Führungsringsegment 2 unterseitig ausgebildeten Verhakungen 21a, 21b in Eingriff kommen. Konkret sind die Verhakungen 21a, 21b L-förmig ausgebildet und symmetrisch zueinander angeordnet. Die Verhakungen 21a weisen einen von dem Führungsringsegment 2 senkrecht abragenden Schenkel auf, der länger ausgebildet ist, als der der Verhakungen 21b, d.h. die Verhakungen 21a sind höher als die Verhakungen 21b. In den Figuren 1 und 3 ist erkennbar, dass sich die Aussparung 19 über die gesamte Tiefe der Backe 14 erstreckt, um den senkrecht von dem Führungsringsegment 2 abstehenden Schenkel der Verhakungen 21a formschlüssig aufzunehmen. In dem verriegelten Zustand der Backen 14, 15, wie er in Figur 3 dargestellt ist, kommt dann der waagerechte Schenkel der Verhakungen 21a flächig mit der Unterseite der Backe 14 in Kontakt. Dagegen ist die Backe 15 lediglich bis etwa zu ihrer mittleren Tiefe ausgespart, um die kleinere Verhakung 21b formschlüssig aufzunehmen. Weiterhin kommt die auseinandergespreizte Backe 14 in ihrer äußeren Stellung mit ihrer Außenseite flächig mit einer Verhakungsflanke 22 des Führungsringsegments 2 in Kontakt.

Des Weiteren ist an der Verriegelungseinheit 12 eine Halteeinrichtung 18 mit einer Anschlagöse 23 vorgesehen. Die Anschlagöse 23 ist in ein U-förmiges Zwischenstück 24 eingeschraubt, welches an der Vorderseite der Verriegelungseinheit 12 lösbar befestigt ist.

Je nachdem, in welche Richtung das Führungsringsegment 2 ausgetrieben bzw. eingebaut werden soll, kann die Verriegelungseinheit 12 zusammen mit der Halteeinrichtung 18 an der linken oder rechten Seite der Hilfsvorrichtung 1 angebracht werden, um die Hilfsvorrichtung 1 entsprechend seitenzurüsten.

Weiterhin ist an dem Grundkörper 5 eine Führungseinheit 25 gehalten. Die Führungseinheit 25 weist eine seitlich gehaltene Führungsschiene 26 auf, welche ausgebildet ist, um in die parallel zu dem auszubauenden Führungsringsegment 2 verlaufende Nut 4 des Trägers 3 einzugreifen und in dieser bewegbar geführt zu werden. Die Führungseinheit 25 kann auch zwei gleichgroße Führungsschienen 26 aufweisen. An ihrem in die Nut 4 eingreifenden Endbereich trägt die Führungsschiene 26 Rollen 27a, welche quer zur Ausbaurichtung X an der Unterseite der Führungsschiene 26 angeordnet sind. Der Durchmesser der Rollen 27a ist annähernd so groß wie die Breite der Nut 4. Des Weiteren sind an der von dem Grundkörper wegweisenden Außenseite der Führungsschiene 26 Rollen 27b angeordnet, deren Durchmesser größer ist als der der Rollen 27a. Die Rollen 27b kommen mit der Außenseite des Trägers 3 in Kontakt, wenn die Hilfsvorrichtung 1 an dem an dem Träger 3 gehaltenen Führungsringsegment 2 befestigt ist. Durch die Rollen 27a, 27b kann die Führungseinheit 21 in dem gebogenen Träger 3 leichter bewegt werden.

In Figur 4 ist gut erkennbar, dass zum Ausbauen des Führungsringsegments 2, welches an dem Träger 3, hier einem Turbinenleitschaufelträger einer Gasturbine, gehalten ist, die an der Hilfsvorrichtung 1 gehaltene Führungsschiene 26 in die parallel zu dem Führungsringsegment 2 verlaufende Nut 4 des Trägers 3 eingesetzt wird. Anschließend wird die Hilfsvorrichtung 1 bis an das zu demontierenden Führungsringsegment 2 geführt.

Dort wird die an der Unterseite des Grundkörpers 5 vorgesehene Anlagefläche 11 mit einer von dem Träger 3 weg weisenden Außenseite des Führungsringsegments 2 in Kontakt gebracht. Danach wird der Verriegelungsmechanismus 12 durch Ziehen des Hebels 16 betätigt. Durch Betätigen des Hebels 16 wird der Dorn 17 zwischen die beiden Backen 14, 15 gedrückt und spreizt diese aus ihrer inneren Stellung in ihre äußere Stellung. Die beiden Backen 14, 15 kommen im Bereich ihrer Aussparungen 19, 20 mit den Verhakungen 21a, 21b des Führungsringsegments 2 in Eingriff. Zudem wird die Backe 14 gegen die Verhakungsflanke 22 des Führungsringsegments 2 gedrückt. Um ein ungewolltes Lösen des Hebelmechanismus 13 zu verhindern, wird der Arretierstift gedrückt, wodurch der Hebel 16 in seiner gezogenen Stellung arretiert wird.

An dem von dem Führungsringsegment 2 wegweisenden Ende der Hilfsvorrichtung 1 angeordnete Anschlagöse 23 wird nun der Seilzug 28 angeschlossen. Der Seilzug 28 ist entlang der Austreibrichtung X des Führungsringsegments 2 positioniert. Wenn, wie hier in Figur 4 gezeigt, der Platz hierzu nicht ausreicht, wird in Ausziehrichtung X vor dem Führungsringsegment 2 eine weitere Anschlagöse 30 als Umlenkmittel an dem Träger 3 angebracht, um den Seilzug 28 außerhalb der Ausziehrichtung X anordnen zu können.

Anschließend wird der Seilzug 28 gespannt und übt eine Zugkraft entlang der Ausziehrichtung X auf die Hilfsvorrichtung 1 aus. Die Zugkraft wird über den an dem Führungsringsegment 2 befestigten Grundkörper 5 auf das Führungsringsegment 2 übertragen. Sobald die Zugkraft den Reibungswiderstand zwischen dem Führungsringsegment 2 und dem Träger 3 überschreitet, wird das Führungsringsegment 2 in Ausziehrichtung X aus der Nut 4 des Trägers 3 gezogen.

Sollte sich das Führungsringsegment 2 währenddessen in der Nut 4 verhaken, kann ein Impuls bzw. können mehrere Impulse durch kräftiges Schlagen des Schlagkörpers 10 gegen den Schenkel 7 über den Grundkörper 5 auf das Führungsringsegment 2 übertragen werden. Sollte der damit maximal erreichbare Impuls, welcher durch die Masse des Schlaggewichts, die maximale Aushollänge zwischen den beiden Schenkeln 7, 8 und die maximal erzielbare Beschleunigung des Schlagkörpers 10 begrenzt wird, nicht ausreichen, kann mithilfe eines Hammers auf das Anschlagelement 29 gehämmert werden.

Die dabei auf den Grundkörper 5 einwirkenden, von der Austreibrichtung X des Führungselements 2 abweichenden Schlag- und Zugkräfte werden in der Führungseinheit 25 aufgenommen und von den mit dem Führungsringsegment 2 formschlüssig verhakten Backen 14, 15 ferngehalten, um ein auf das Führungsringsegment 2 einwirkendes Biegemoment möglichst gering zu halten.

Wenn das Führungsringsegment 2 über das Ende der Nut 4 des Turbinenleitschaufelträger 3 hinaus ausgetrieben wurde, kann es entnommen werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Hilfsvorrichtung (1) zur Montage und/oder Demontage eines Führungsringsegments (2), welches an einem Träger (3), insbesondere einem Turbinenleitschaufelträger einer Gasturbine, anzubringen oder gehalten ist, mit einem Grundkörper (5), welcher an dem Führungsringsegment (2) lösbar befestigbar ist, und einer Halteeinrichtung (18), an welcher ein Zugmittel (28) lösbar befestigbar ist,
wobei die Halteeinrichtung (18) ausgebildet ist, eine über das Zugmittel (28) in einer Einbaurichtung oder Austreibrichtung (X) des Führungsringsegments (2) einwirkende Zugkraft auf den Grundkörper (5) zu übertragen.

2. Hilfsvorrichtung (1) nach Anspruch 1,
**dadurch gekennzeichnet, dass**
eine Verriegelungseinheit (12) an dem Grundkörper (5) vorgesehen, insbesondere lösbar befestigt ist, welche ausgebildet ist, den Grundkörper (5) lösbar an dem Führungsringsegment (2) zu befestigen.

3. Hilfsvorrichtung (1) nach Anspruch 2,
**dadurch gekennzeichnet, dass**
die Verriegelungseinheit (12) in Einbaurichtung oder Austreibrichtung (X) gesehen an einer vorderen Stirnseite des Grundkörpers (5) angeordnet und ausgebildet ist, das Führungsringsegment (2) zumindest in einem verriegelten Zustand zu untergreifen und/oder hintergreifen.

4. Hilfsvorrichtung (1) nach Anspruch 3,
**dadurch gekennzeichnet, dass**
die Verriegelungseinheit (12) zwei Backen (14, 15) aufweist, welche zwischen einer inneren und einer äußeren Stellung hin und her bewegbar sind, wobei die Backen (14, 15) in einer äußeren Stellung mit dem Führungsringsegment (2) in Eingriff kommen.

5. Hilfsvorrichtung (1) nach Anspruch 4,
**dadurch gekennzeichnet, dass**
die Backen (14, 15) an ihren voneinander wegweisenden Außenseiten Aussparungen (19, 20) aufweisen, um in einer äußeren Stellung mit an dem Führungsringsegment (2) ausgebildeten Verhakungen (21a, 21b) in Eingriff zu kommen.

6. Hilfsvorrichtung (1) nach Anspruch 5,
**dadurch gekennzeichnet, dass**
die Verriegelungseinheit (12) einen Hebelmechanismus (13) aufweist, welcher ausgebildet ist, die Backen (14, 15) zwischen einer inneren und einer äußeren Stellung hin und her zu bewegen, und insbesondere ein Arretierungsmittel vorgesehen ist, um den Hebelmechanismus (13) zumindest in einem verriegelten Zustand der Verriegelungseinheit (12) zu arretieren.

7. Hilfsvorrichtung (1) nach einem der vorherigen Ansprüche,
**dadurch gekennzeichnet, dass**
die Halteeinrichtung (18) an der Verriegelungseinheit (12) vorgesehen, insbesondere lösbar befestigt ist.

8. Hilfsvorrichtung (1) nach einem der vorherigen Ansprüche,
**dadurch gekennzeichnet, dass**
die Halteeinrichtung (18) eine Anschlagöse (23) aufweist.

9. Hilfsvorrichtung (1) nach einem der vorherigen Ansprüche,
**dadurch gekennzeichnet, dass**
an einer Unterseite des Grundkörpers (5) eine Anlagefläche (11) ausgebildet ist, welche mit dem Führungsringsegment (2) zumindest bereichsweise flächig in Kontakt gebracht werden kann.

10. Hilfsvorrichtung (1) nach einem der vorherigen Ansprüche,
**dadurch gekennzeichnet, dass**
der Grundkörper (5) eine längliche Grundform aufweist.

11. Hilfsvorrichtung (1) nach einem der vorherigen Ansprüche,
**dadurch gekennzeichnet, dass**
der Grundkörper (5) wenigstens ein grundkörperfestes Anschlagelement (29) aufweist, insbesondere welches an einer der Halteeinrichtung (23) gegenüberliegenden Stirnseite des Grundkörpers (5) ausgebildet ist.

12. Hilfsvorrichtung (1) nach einem der vorherigen Ansprüche,
**dadurch gekennzeichnet,**
**dass** der Grundkörper (5) eine L-förmige Grundform aufweist, wobei ein Schenkel (7, 8) des L-förmigen Grundkörpers ein grundkörperfestes Anschlagelement bildet.

13. Hilfsvorrichtung (1) nach Anspruch 12,
**dadurch gekennzeichnet, dass**
ein Schlagkörper (10) vorgesehen ist, welcher an dem Grundkörper (5) zumindest im Wesentlichen entlang der Einbaurichtung oder Austreibrichtung (X) des Führungsringsegments (2) hin und her bewegbar geführt ist,
wobei eine Endposition des Schlagkörpers (10) durch das Anschlagelement (7) definiert ist.

14. Hilfsvorrichtung (1) nach einem der vorherigen Ansprüche,
**dadurch gekennzeichnet, dass**
der Grundkörper (5) eine U-förmige Grundform aufweist.

15. Hilfsvorrichtung (1) nach Anspruch 13 und 14,
**dadurch gekennzeichnet, dass**
der U-förmige Grundkörper (5) zwischen den zwei U-Schenkeln (7, 8) einen die beiden Schenkel (7, 8) verbindenden Führungssteg (9) aufweist, an welchem der Schlagkörper (10) geführt ist.

16. Hilfsvorrichtung (1) nach Anspruch 15,
**dadurch gekennzeichnet, dass**
der in Einbaurichtung bzw. Austreibrichtung (X) vorne angeordnete Schenkel (7) das Anschlagelement bildet und/oder der hinten angeordnete Schenkel (8) eine Ausholposition definiert.

17. Hilfsvorrichtung (1) nach einem der vorherigen Ansprüche,
**dadurch gekennzeichnet, dass**
eine Führungseinheit (25) an dem Grundkörper (5) vorgesehen, insbesondere lösbar befestigt ist, welche ausgebildet ist, um den Grundkörper (5) während der Montage oder Demontage des Führungsringsegments (2) in seiner Lage relativ zu dem Führungsringsegment (2) zu führen.

18. Hilfsvorrichtung (1) nach Anspruch 17,
**dadurch gekennzeichnet, dass**
die Führungseinheit (25) wenigstens eine an dem Grundkörper (5) gehaltene Führungsschiene (26) aufweist, welche ausgebildet ist, um in eine parallel zu dem zu montierenden oder demontierenden Führungsringsegment (2) verlaufende Nut (4) des Trägers (3) einzugreifen und in dieser bewegbar geführt zu werden.

19. Hilfsvorrichtung (1) nach Anspruch 18,
**dadurch gekennzeichnet, dass**
die Führungsschiene (26) an ihrem zu der Nut (4) weisenden Endbereich Rollen (27a, 27b) trägt,
insbesondere wobei die Führungsschiene (26) zumindest an ihrem mit der Nut (4) in Eingriff zu bringenden Endbereich Rollen (27a) trägt.

20. Verfahren zum Montieren und/oder Demontieren eines Führungsringsegments (2), welches an einem Träger (3), insbesondere einem Turbinenleitschaufelträger einer Gasturbine, anzubringen oder gehalten ist,
bei welchem eine Hilfsvorrichtung (1) nach einem der vorherigen Ansprüche mit einer an ihrer Unterseite vorgesehenen Anlagefläche (11) mit einer von dem Träger (3) wegweisenden Außenseite des Führungsringsegments (2) in Kontakt gebracht wird, die Hilfsvorrichtung (1) an dem Führungsringsegment (2) lösbar befestigt wird, eine Halteeinrichtung (18), insbesondere eine Anschlagöse (23), in Einbaurichtung bzw. Austreibrichtung (X) gesehen vorne an dem Grundkörper (5) lösbar befestigt wird, ein Zugmittel (28), insbesondere ein Seilzug, mit der Halteeinrichtung (18), insbesondere der Anschlagöse (23), verbunden wird, und das Zugmittel (28) gespannt wird, um die Hilfsvorrichtung (1) in Einbaurichtung bzw. Austreibrichtung (X) zu ziehen.

21. Verfahren nach Anspruch 20,
**dadurch gekennzeichnet, dass**
in Einbaurichtung bzw. Austreibrichtung (X) vor der Hilfsvorrichtung (1) ein Umlenkmittel (30), insbesondere eine weitere Anschlagöse (30), an dem Träger (3) befestigt wird, um eine von dem Zugmittel (28) aufgebrachte Zugkraft in Einbaurichtung bzw. Austreibrichtung (X) umzulenken.

22. Verfahren nach Anspruch 20 oder 21,
**dadurch gekennzeichnet, dass**
mit wenigstens einem Schlagkörper (10) gegen ein grundkörperfestes Anschlagselement (7, 8, 29) geschlagen wird, um mit jedem Schlag einen Impuls des Schlagkörpers (10) über den Grundkörper (5) auf das Führungsringsegment (2) in Einbaurichtung bzw. Austreibrichtung (X) zu übertragen.

23. Verfahren nach Anspruch 22,
**dadurch gekennzeichnet, dass**
ein Hammer als Schlagkörper eingesetzt wird, wobei der Schlagkörper insbesondere gegen das grundkörperfeste Anschlagselement (29) geschlagen wird.

24. Verfahren nach Anspruch 22 oder 23,
**dadurch gekennzeichnet, dass**
ein an dem Grundkörper (5) entlang der Einbaurichtung bzw. Austreibrichtung (X) geführtes Schlaggewicht (10) eingesetzt wird, welches vor und zurück bewegt wird, wobei der Schlagkörper (10) bei der Vorwärtsbewegung gegen das grundkörperfeste Anschlagelement (7, 8) geschlagen wird.

25. Verfahren nach einem der Ansprüche 20 bis 24,
**dadurch gekennzeichnet, dass**
ein an dem Grundkörper (5) befestigtes Führungsmittel (25) zumindest teilweise in eine parallel zu dem auszutreibenden bzw. einzubauenden Führungsringsegment (2) verlaufende Nut (4) des Trägers (3) eingesetzt wird, um die Hilfsvorrichtung (1) in ihrer Lage relativ zu dem Führungsringsegment (2) zu stützen und entlang der Einbaurichtung bzw. Austreibrichtung (X) zu führen.
